Europäisches Patentamt

European Patent Office

Office européen des brevets

(11) Publication number: **0 119 781**
A1

# EUROPEAN PATENT APPLICATION

(21) Application number: 84301443.2

(22) Date of filing: 05.03.84

(51) Int. Cl.³: **G 21 F 1/08, C 01 B 3/00**

(30) Priority: 04.03.83 JP 36379/83
25.08.83 JP 156060/83

(43) Date of publication of application: 26.09.84
Bulletin 84/39

(84) Designated Contracting States: **DE FR GB SE**

(71) Applicant: **KABUSHIKI KAISHA KOBE SEIKO SHO also known as Kobe Steel Ltd., 3-18 1-chome, Wakinohama-cho Chuo-ku, Kobe 651 (JP)**

(72) Inventor: **Ito, Masuzo, 1-158 Midorigaoka, Itami Hyogo-ken (JP)**

(74) Representative: **Barnard, Eric Edward et al, BROOKES & MARTIN High Holborn House 52/54 High Holborn, London WC1V 6SE (GB)**

(54) A neutron shielding material.

(57) Packaging employs as a neutron shielding material hydrogenated titanium-aluminum alloys having excellent thermal properties.

- 1 -

## BACKGROUND OF THE INVENTION

1. Field of the invention:

The present invention relates to a neutron shielding material. More particularly, it relates to a neutron shielding material having excellent thermal conductivity and heat-resistant properties.

2. Description of the prior art:

As a neutron shielding material, boron nitride or boron carbide has been used. As a neutron moderator used to increase the neutron absorbence of the shielding material, hydrogen-rich materials such as water, paraffin, wood, resin or concrete have been used. However, when these materials are used as a shielding material for exothermic radioactive materials, they can only be positioned at a certain location because of the lack of heat-resistance and thermal conductivity.

Since hydrogen-stored alloys contain more hydrogen per a unit volume than water, resin, liquid hydrogen or the like used generally as materials containing hydrogen, they are preferable as neutron moderators. Eliminating the hydrogen from these hydrogen-stored alloys at a low temperature under a low pressure has been studied, but the use of these hydrogen-stored alloys as a neutron moderator in a high temperature atmosphere has not been intended.

Materials containing boron exhibit a shielding effect aginst the thermal neutron zone alone. Materials containing hydrogen as a neutron moderator are required for a dry-type transportation packaging or a dry-type storage packaging for nuclear fuels containing fast neutron, and thus, have to be excellent in heat-resistance and thermal conductivity. Sythetic resins, which lack both heat-resistance and thermal conductivity, are generally used together with aluminum and/or carbon to counteract these defects.

## SUMMARY OF THE INVENTION

The neutron shielding material of this invention which overcomes the above-discussed disadvantages of the prior art, comprises hydrogenated titanium-alminum alloys. The alloys consist essentially of 0-25 percent by weight of aluminum and the remaining portion of titanium.

The neutron shielding material of this invention also comprises a hydrogenated titanium-aluminum neutron moderator and a boron nitride or boron carbide neutron absorber.

Thus, the invention described herein makes possible the objects of (1) providing a neutron shielding material which is excellent in heat-resistance and thermal conductivity; (2) providing a neutron shielding material against $\gamma$-rays coexisting with neutrons; and (3) providing a neutron shielding material which is powdery thereby being easy for handling and applicable to any desian.

## BRIEF DESCRIPTION OF THE DRAWINGS

Figure 1 is a partly sectional side view of a packaging wherein a neutron shielding material according to this invention is applied.

Figure 2 is a transverse sectional view of the packaging in Figure 1.

Figure 3 is a partly sectional side view of another packaging.

Figure 4 is a transverse sectional view of the packaging in Figure 3.

Figure 5 is an arrangement of neutron shielding materials, according to this invention, in the packaging body.

Figure 6 is a graph showing the relationship between the aluminum content and the amount of stored hydrogen in hydrogenated titanium-aluminum alloys.

Figure 7 is a graph showing a comparison of the different shielding effects of hydrogenated titanium-aluminum alloys and boron nitride.

Figure 8 is a graph showing a comparison of the different shielding effects of hydrogenated titanium-aluminum alloys, boron nitride and synthetic resins.

## DESCRIPTION OF THE PREFERRED EMBODIMENTS

Of the titanium-aluminum alloys such as $Ti_2$-Al, $Ti_3$-$Al_2$ and $Ti_3$-Al, the $Ti_3$-Al alloy is preferable because it contains a large amount of hydrogen and stores the hydrogen at up to approximately 600°C. These titanium-aluminum alloys, containing aluminum in the range of 0 to 25% by weight and the remaining portion of titanium, are used as a neutron moderator together with a neutron absorber, an example of which is boron nitride or boron carbide. Boron nitride and boron carbide are so excellent in thermal conductivity that they can be employed as a neutron absorber for trasportation packaging or storage packaging, for nuclear fuels, made of a cast iron or a cast steel. Also, they can be produced as a powder so that they can be molded into a desired shape. When they are used together with the aforementioned titanium-aluminum alloys, the neutron absorbence is increased thereby resulting in a neutron shielding material, having an excellent thermal conductivity, which exhibits a high shielding effect in the entire neutron spectrum area and can be continuously used for a long period of time at a temperature of as high as 500°C.

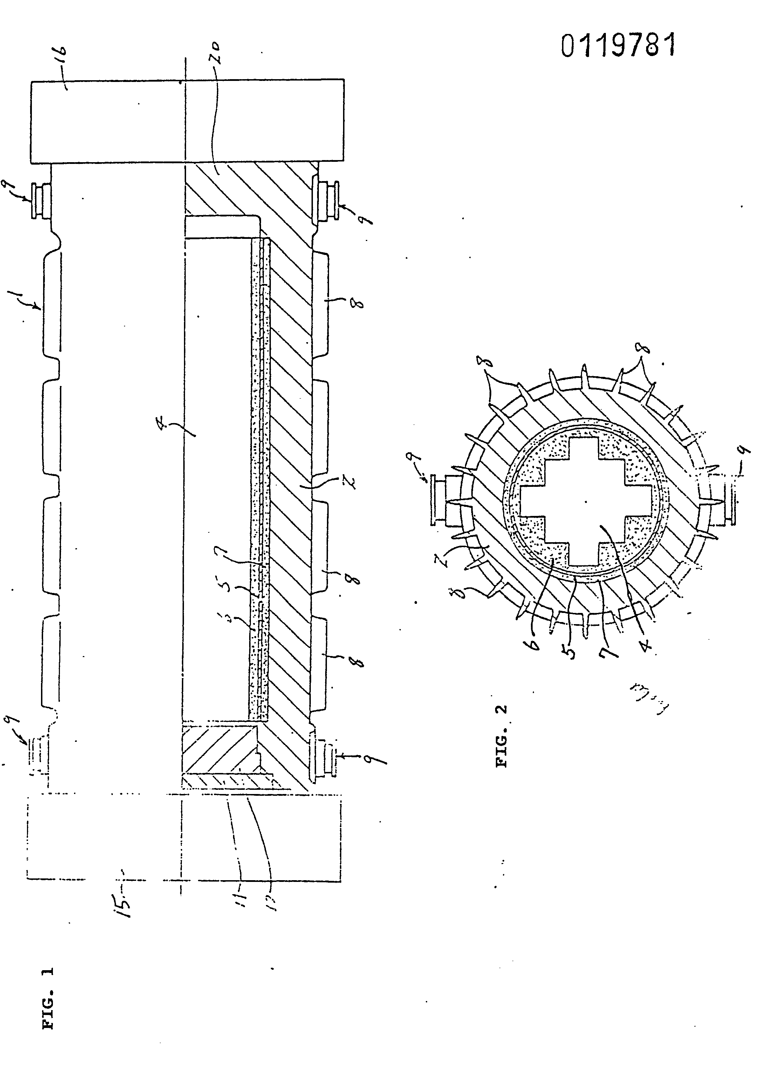

Figures 1 and 2 show a packaging for a shielding material according to this invention, which comprises a packaging body 1 made of cast iron or cast steel wherein a bottom 20 is united with a shell 2. The open end of the shell 2 is sealed with the inner lid 10 and the outer lid 11 through a gasket (not shown). At both ends on the surface of the shell 2, trunnions 9 are disposed. Reference numerals 5 and 6 indicate a shock absorbing cover. The packaging body 1 contains a basket 4 to charge radioactive materials therein. The basket 4 is placed in a tube 5. A shielding material 6 is injected in a space between the basket 4 and the tube 5, and a second shielding material 7 is injected between the tube 5 and the shell 2. The shielding materials may be also disposed within the bottom 20 of the shell 2. On the outer surface of the shell 2, plural fins 8 are disposed to dissipate heat from the shielding materials. These fins may be circumferentially disposed on the packaging body 1.

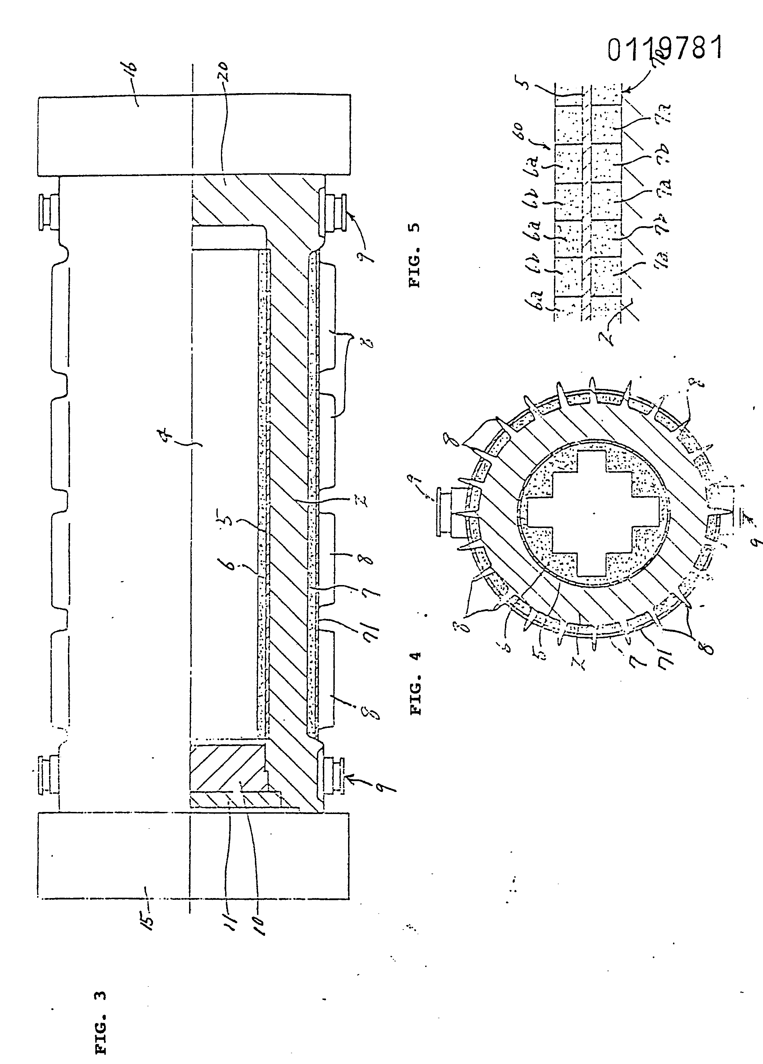

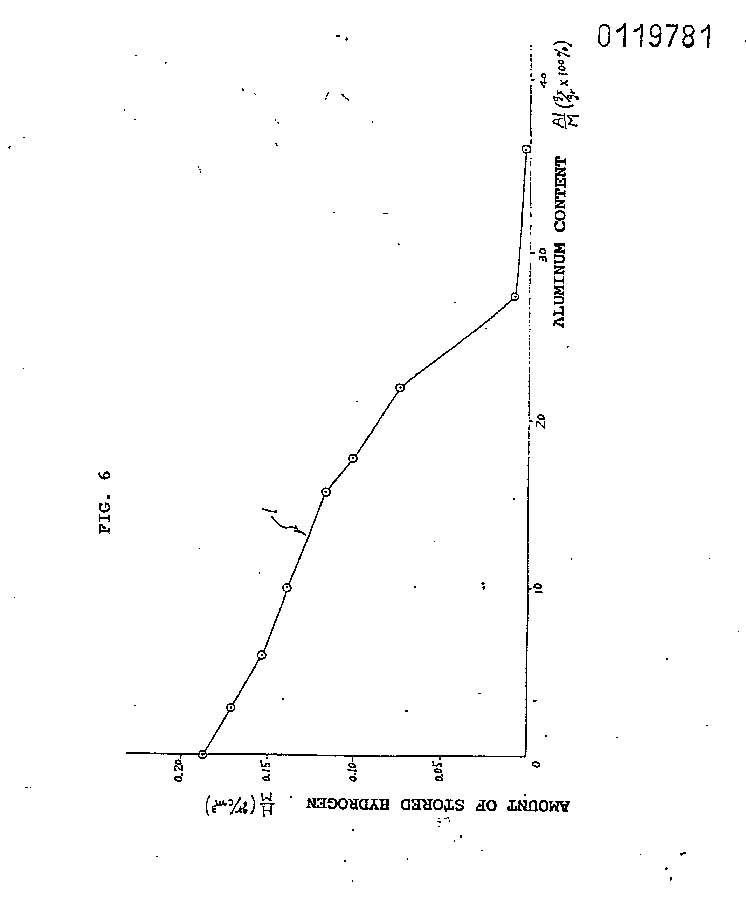

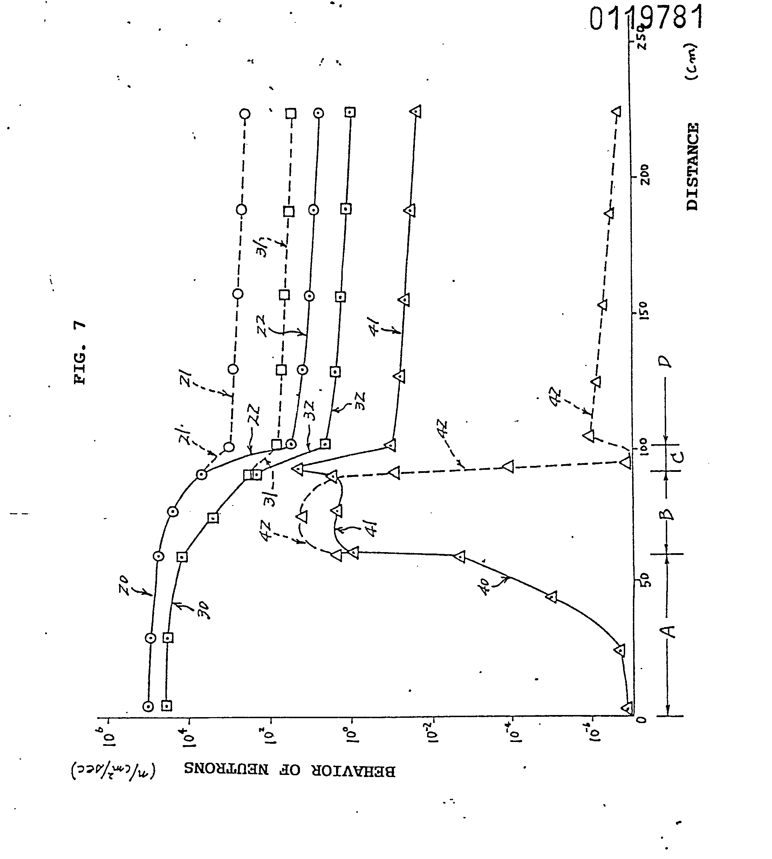

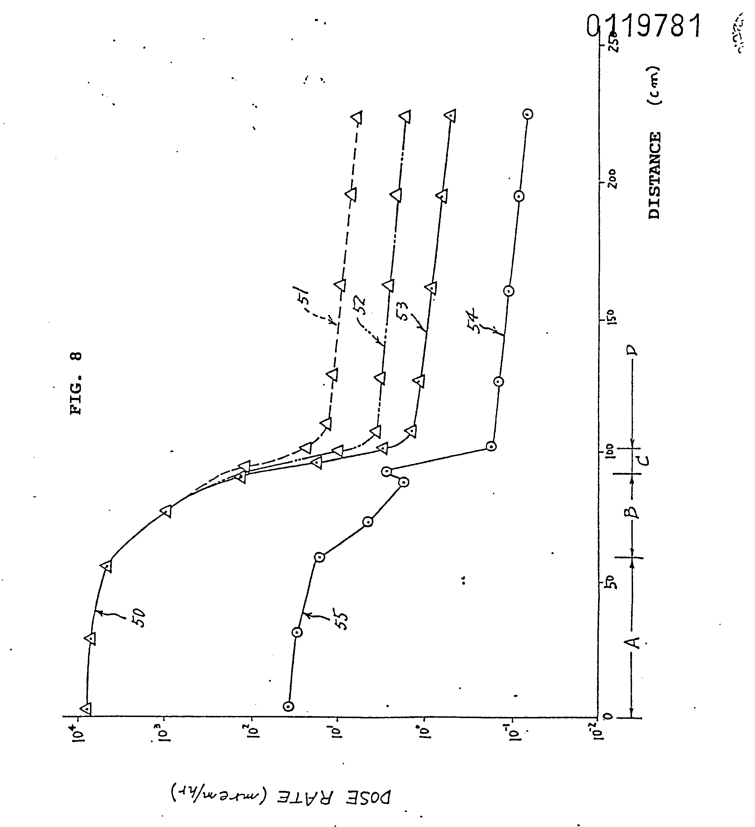

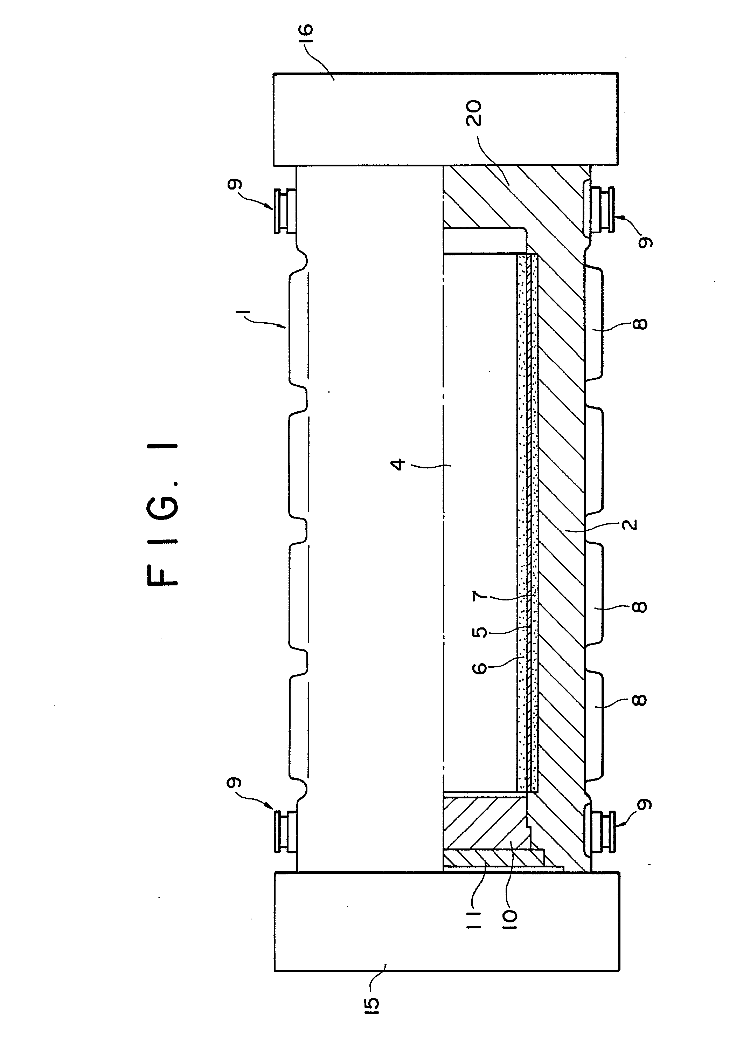

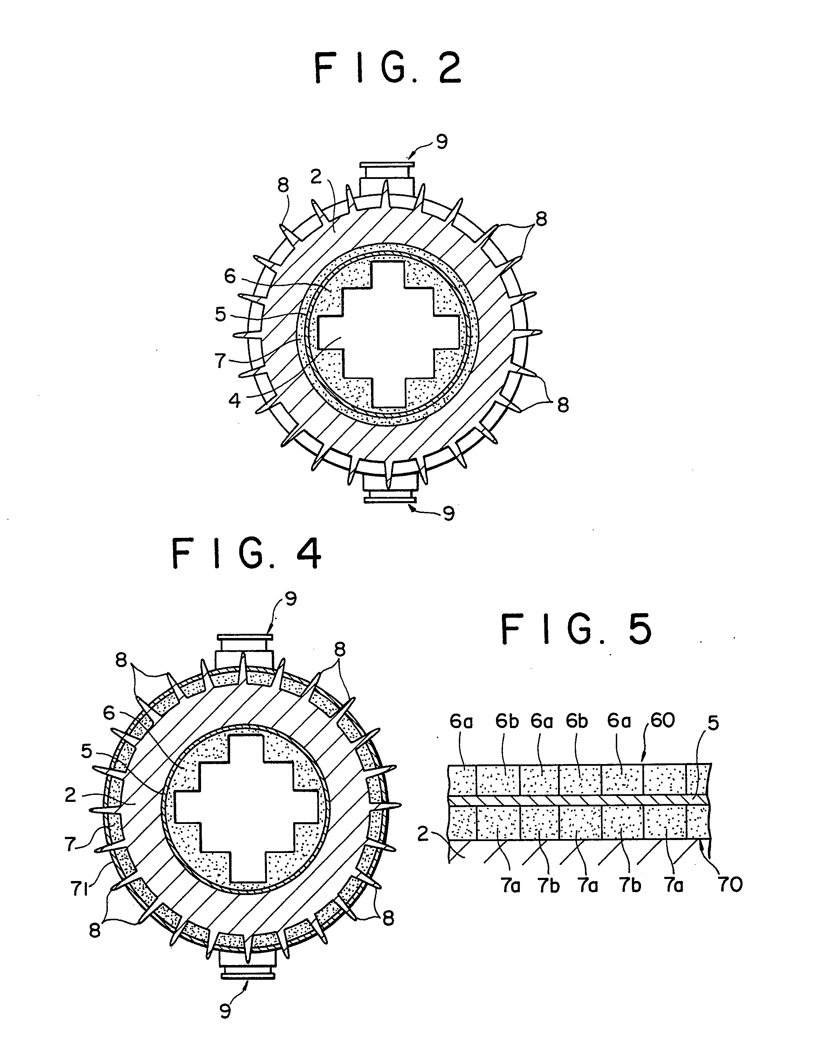

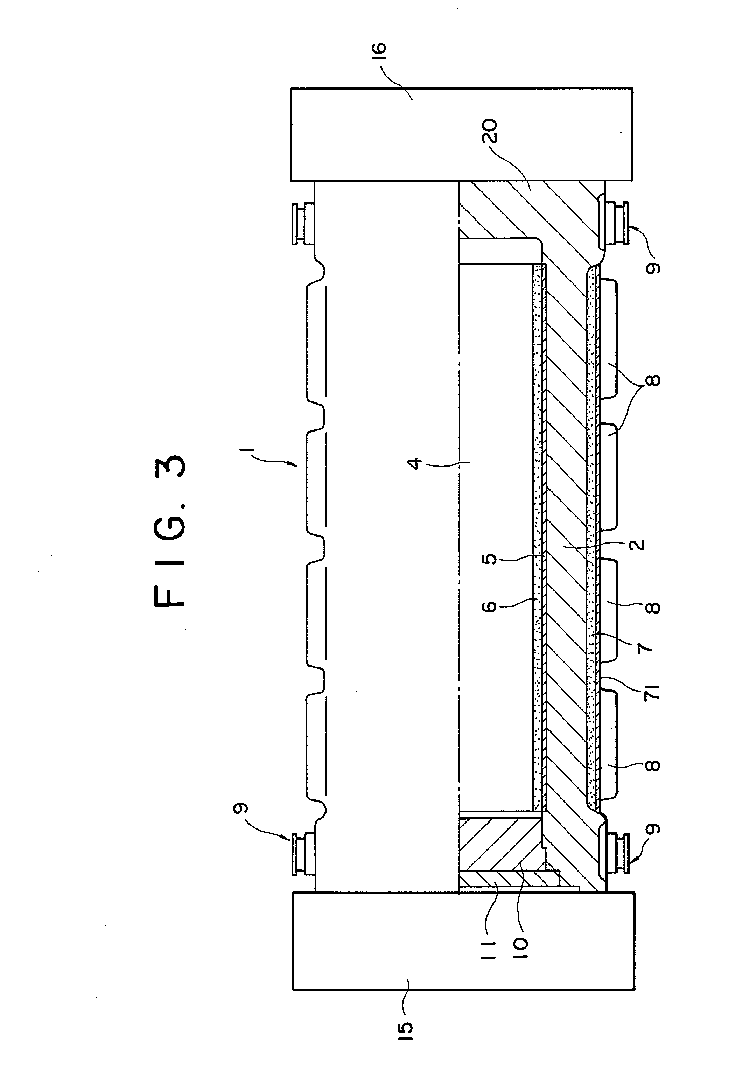

Figures 3 and 4 show another packaging 1, wherein a shielding material 6 is injected in a space between a basket 4 and a tube 5, and a second shielding material 7 is disposed on the outside of the shell 2. The outer side of the second shielding material 7 is covered by a tube 71.

The shielding material 6, which is, for example, made of a mixture of the $Ti_3$-Al-Hn alloy powder with boron nitride powder or boron carbide powder, serves as a moderator and an absorber of fast neutrons thereby exhibiting an excellent shielding effect. The second shielding material 7, which is, for example, made of boron nitride powder or boron carbide powder, mainly serves to absorb neutrons thereby exhibiting a shielding effect. Both of the shielding materials 6 and 7 may be made of sintered compacts of boron nitride powder and/or boron carbide powder.

According to the packaging 1 shown in Figure 1 to 4, respectively, neutron energy from the basket 4 is absorbed to a great extent by the shielding material **6** and the remaining small amount of energy is absorbed by the second **7**. Thus, the thickness of the shell **2** may be reduced thereby enabling a reduction of weight of the packaging body. Heat-dissipation from the basket **4** is not prevented because of the superior heat-resistance and heat-conductivity of the shielding materials **6** and **7**.

The sintered compact constituting the shielding materials **6** and **7** may be disposed as one body or a combination of pieces shown in Figure **5**, wherein the shielding material **60** is disposed with alternations of block **6a** and block **6b** and the second **70** is disposed with alternations of block **7a** and block **7b**. The block **6a** may be of a sintered compact of $Ti_3$-Al powder and the block **6b** may be of a sintered compact of boron nitride powder or boron carbide powder. Alternatively, both the blocks **6a** and **6b** may be of the same sintered compacts.

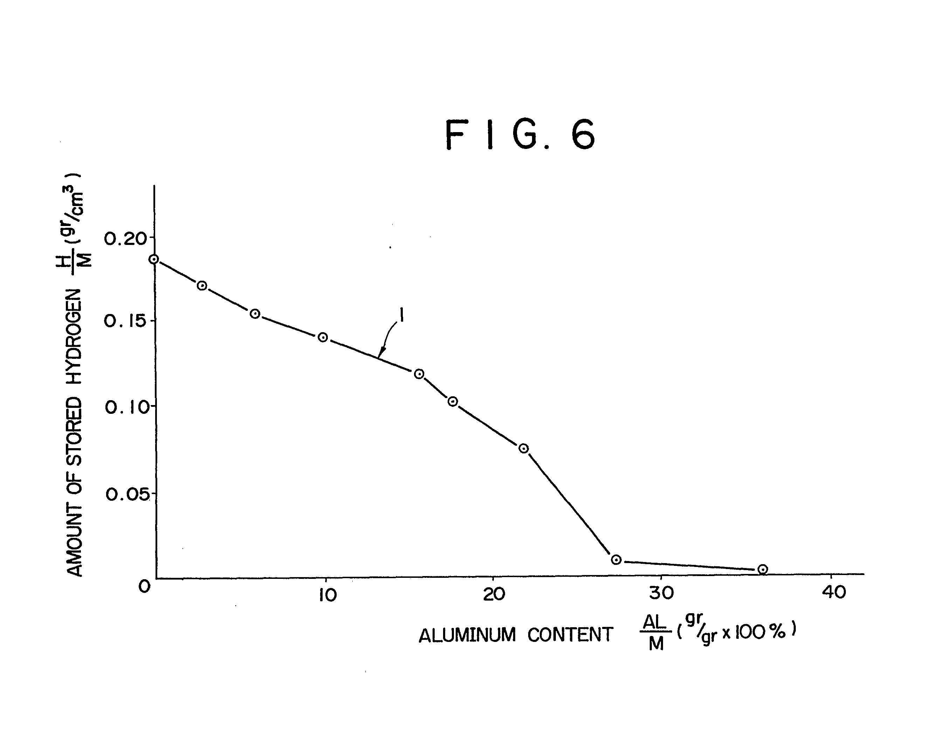

The amount of hydrogen stored by the titanium-aluminum alloys and the storing and releasing properties of the alloys depend upon the amount of aluminum in the alloys as seen from the below-mentioned Table and Figure **6**.

| Sample No. | Hydrogen Stored Ti-Al Alloys | Aluminum Content in Ti-Al Alloys (gr/gr x100%) | Amount of Hydrogen Stored by Ti-Al Alloys (gr/cm$^3$) | Properties |
|---|---|---|---|---|
| 1 | Ti-$H_2$ | 0 | 0.188 | store at above 500°C Release at above 670°C |
| 2 | $Ti_{19}$-Al-$H_{36.2}$ | 2.88 | 0.172 | Store at ordinary Temp. Release at above 600°C |
| 3 | $Ti_9$-Al-$H_{16.3}$ | 5.89 | 0.153 | same as above |
| 4 | $Ti_5$-Al-$H_{9.06}$ | 10.1 | 0.140 | same as above |
| 5 | $Ti_3$-Al-$H_{5.18}$ | 15.8 | 0.118 | same as above |
| 6 | $Ti_{2.6}$-Al-$H_{3.92}$ | 17.8 | 0.101 | same as above |
| 7 | $Ti_2$-Al-$H_{2.25}$ | 22.0 | 0.075 | same as above |
| 8 | $Ti_3$-$Al_2$-$H_{0.42}$ | 27.3 | 0,008 | Hydrogen is contained in a solid solution state. |
| 9 | Ti-Al-$H_{0.068}$ | 36.0 | 0.003 | same as above |

- 8 -

The above Table and Figure 6 indicate that:

(1) When the amount of aluminum in the alloy is less, the amount of hydrogen that can be stored is greater;

(2) When the amount of aluminum in the alloys becomes zero, i.e. titanium alone, the storing and the releasing of hydrogen are achieved at a high temperature. The amount of hydrogen that can be stored is the largest;

(3) As a small amount of aluminum is contained in the alloys, the hydrogen storing temperature is remarkably decreased to approximately ordinary temperature while the hydrogen releasing temperature is maintained at a high temperature; and

(4) When aluminum is greater than 25%, the amount of hydrogen that can be stored is remarkably reduced.

Since the standard of the hydrogen content which is effective as a neutron shielding is 0.07grH/cc or more for liquid hydrogen and 0.11gr/cc or more for water ($H_2O$), the most effective shielding materials are sample Nos.1 to 5 in the above Table, wherein the aluminum content ranges from 0 to 22%. Practically, shielding materials of aluminum content up to 25% are also acceptable.

The property of the alloy according to the present invention is classified, depending on the content of aluminum, into the following three categories:

1) The first category: (the content of Al= not less than 0 to not more than 6 wt %)

Hydrogen can be easily stored at a commercial low temperature and the amount of hydrogen to be stored bocomes great. Hydrogen is released at a high temperature of about 600 C and the good heat resistance can be enjoyed.

2) The second category: (the content of Al= 0 %) The amount of hydrogen to be stored becomes the greatest.
The releasing of hydrogen is achieved at a high temperature
but the hydrogen storing temperature is likely to be a
high temperature of about 500 C.

3) The third category: ( the content of Al: 6 to 25 wt% ) Hydrogen can be easily stored at an ambient temperature
and the hydrogen releasing temperature becomes enough high
but the amount of hydrogen to be stored is less as compared
to the above two alloys.

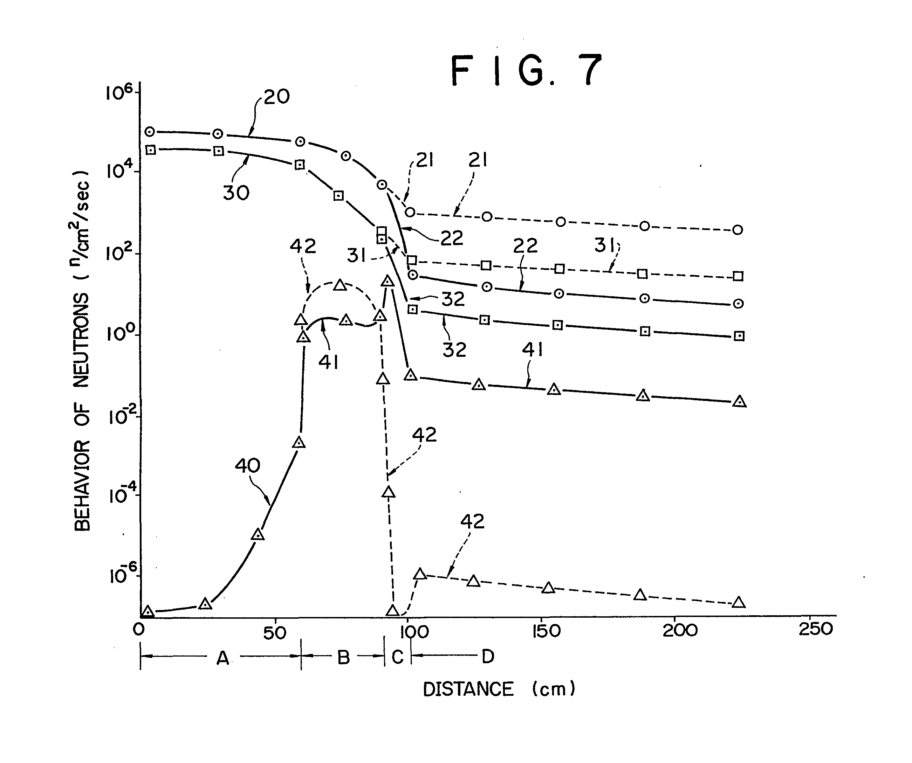

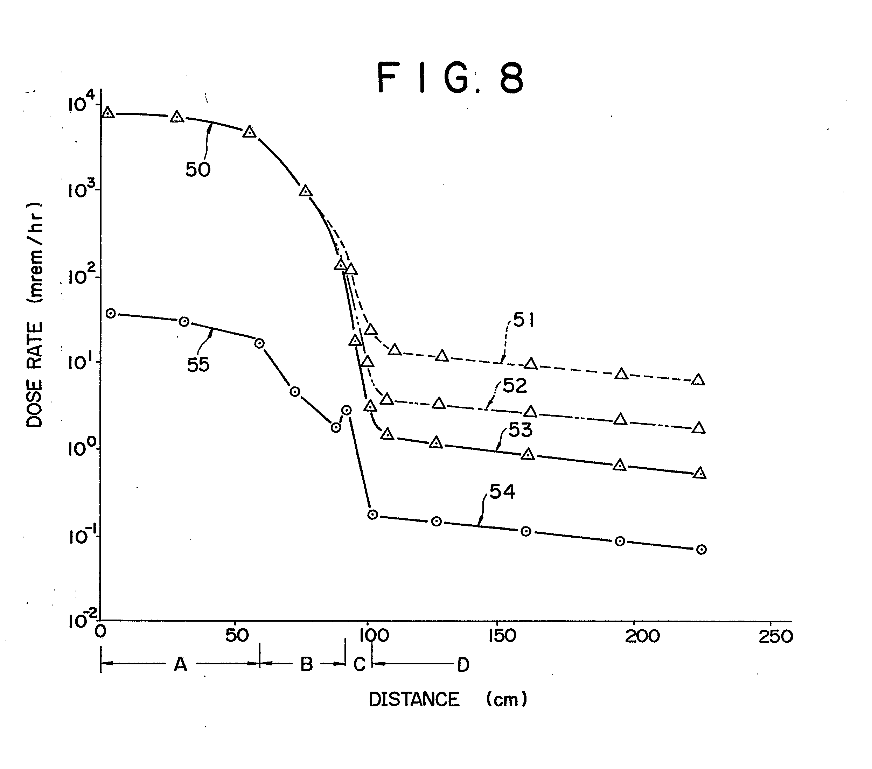

Figures 7 and 8 show the shielding effect at
a time when the neutron shielding materials mentioned
above are applied to a packaging.

The difference in a shielding effect
depending upon the kind of neutrons is shown in Figure
7 wherein the zone A is at the generation source, the
zone B is the steel packaging wall, the zone C is a
neutron shielding wall and the zone D is the outside atmosphere of the packaging. The curve **20** shows the behavior of intermediate neutrons, the curve **30** shows the behavior of fast neutrons and the curve **40** shows the behavior of heat neutrons in the zones **A** and **B**. Figure **7** indicates that the neutrons at the generation source, zone **A**, are substantially fast and intermediate neutrons.

These neutrons decay while passing through the shielding wall. When the shielding material is made of a boron nitride alone, the intermediate neutrons exhibit a decay curve as shown by the curve **21**, while when the shielding material is made of a hydrogenated titanium-aluminum alloy plus **10%** boron nitride, the intermediate neutrons decay as shown by the curve **22**. The fast neutrons exhibit a decay curve as shown by the curve **31** when the shielding material is made of boron nitride alone, while they decay as shown by the curve **32** when the shielding material is of a hydrogenated titanium-aluminum alloy plus **10%** boron nitride.

The heat neutrons show a decay curve **41** when the shielding material is made of the above-mentioned alloy, while they decay as shown in the curve **42** using a shielding material made of boron nitride alone. This can be explained by the phenomenon that the neutrons change from fast neutrons into the heat neutrons due to a decay effect of the alloy and thus the heat neutrons rapidly increase. Although the degree of the decay of the curve **41** is slight as compared with that of the curve **42**, the absolute value of the heat neutrons shown by the curve **41** is 2 orders lower than for the fast and/or the intermediate neutrons shown by the curves **22** and **32**. The heat neutrons shown by the curve **41** decay with the additional use of a shielding material of boron nitride.

Figure **8** shows the shielding effect of the radioactive influence on the human body, wherein the curve **50** indicates the neutron dose rate and the curve **55** the γ-ray dose rate.

As seen from Figure **8**, the neutron dose rate shown by the curve **50** decays as shown in the curve **51** when the shielding material is of boron nitride alone, and as shown in the curve **52** when the shielding material is of a synthetic resin alone, while it decays as shown in the curve **53** when the shielding material is of a hydrogenated titanium-aluminum alloy plus 10% boron nitride. Also, the γ-ray dose rate shown by the curve **55** decays remarkably as shown in the curve **54** when a hydrogenated titanium-aluminum alloy plus 10% boron nitride is used as the shielding material. These shielding effects are not expected from the use of boron nitrides and/or synthetic resins.

It is understood that various other modification will be apparent to and can be readily made by those skilled in the art without departing from the scope and spirit of this invention. Accordingly, it is not intended that the scope of the claims appended hereto be limited to the description as set forth herein, but rather that the claims be construed as encompassing all the features of patentable novelty which reside in the present invention, including all features which would be treated as equivalents thereof by those skilled in the art to which this invention pertains.

1

CLAIMS

1. A neutron shielding material comprising hydrogenated titanium-aluminum alloys.

2. A neutron shielding material according to claim 1, wherein said hydrogenated titanium-aluminum alloys consist essentially of 0-25 percent by weight of aluminum and the remaining portion of titanium.

3. A neutron shielding material comprising a hydrogenated titanium-aluminum neutron moderator and a boron nitride or boron carbide neutron absorber.

4. A neutron shielding material according to claim 2, wherein said hydrogenated titanium-aluminum alloys consist essentially of not less than 0 to not more than 6 percent by weight of aluminum and the remaining portion of titanium.

5. A neutron shielding material according to claim 2, wherein said hydrogenated titanium-aluminum alloys consist essentially of 6 to 25 percent by weight of aluminum and the remaining portion of titanium.

FIG. 1

FIG. 2

0119781

FIG. 3

FIG. 4

FIG. 5

FIG. 6

AMOUNT OF STORED HYDROGEN $\frac{H}{M}$ $(\gamma/cm^3)$

ALUMINUM CONTENT $\frac{Al}{M}$ $(\frac{g}{gr} \times 100\%)$

0119781

FIG. 7

FIG. 8

# F I G. 1

011978I

# FIG. 2

# FIG. 4

# FIG. 5

# F I G. 3

0119781

F I G. 6

FIG. 7

0119781

FIG. 8

**European Patent Office**

## EUROPEAN SEARCH REPORT

Application number

ᴇP 84 30 1443

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 720 752 (R. VAN HOUTEN)<br>* Column 1, lines 31-51 * | 1,3 | G 21 F 1/08<br>C 01 B 3/00 |
| A | FR-A-2 366 673 (BROOKS AND PERKINS)<br>* Page 1, lines 14-25 * | 1,3 | |
| A | GB-A-2 001 676 (RENAULT)<br>* Page 2, lines 6-15 * | 1,3 | |

TECHNICAL FIELDS SEARCHED (Int. Cl. ³)

G 21 F 1/00
C 01 B 3/00
C 22 C 14/00

The present search report has been drawn up for all claims

| Place of search | Date of completion of the search | Examiner |
|---|---|---|
| THE HAGUE | 06-06-1984 | GIANNI G.L.G. |